# EUROPÄISCHE PATENTSCHRIFT

(11) **EP 0 539 988 B1**
(45) Veröffentlichungstag und Bekanntmachung des Hinweises auf die Patenterteilung: **01.03.1995**
(21) Anmeldenummer: 92118514.6
(22) Anmeldetag: 29.10.1992
(51) Int. Cl.: C08F 261/06, C08F 4/34, C08F 293/00, C07C 409/38

(54) **Pfropfcopolymerisate mit verbesserter Phasenanbindung zwischen Pfropfgrundlage und aufgepfropfter Polymerphase**
Graft copolymers with improved binding between the phase of the backbone and the grafted polymer phase
Copolymères greffés avec des jonctions des phases améliorées entre le tronc et la phase greffée

(30) Priorität: 31.10.1991 DE 4135984
(43) Veröffentlichungstag der Anmeldung: 05.05.1993
(73) Patentinhaber: WACKER-CHEMIE GMBH, D-81737 München (DE)
(72) Erfinder: Kohlhammer, Klaus, Dr., W-8261 Marktl (DE); Petersen, Hermann, Dr., W-8263 Burghausen (DE); Dobler, Walter, W-8342 Tann (DE)

(56) Entgegenhaltungen:
- EP-A- 0 277 608
- EP-A- 0 295 821
- DE-B- 1 292 858

## Beschreibung

Die Erfindung betrifft Pfropfcopolymerisate mit verbesserter Phasenanbindung zwischen Pfropfgrundlage und aufgepfropfter Polymerphase, diesen zugrundeliegende peroxygruppenhaltige Copolymerisate sowie copolymerisierbare Peroxymonovinylester. Weiter betrifft die Erfindung Verfahren zur Herstellung der genannten Polymerisate und Peroxyverbindungen.

Copolymerisierbare Initiatoren bieten interessante Möglichkeiten bei der Herstellung von neuen polymeren Materialien. Durch sie werden potentielle Radikalfunktionen in Polymerketten eingebracht, die bei der Herstellung von Pfropf- und Blockcopolymeren als definierte Ankergruppen fungieren. Ein Anwendungsgebiet ist beispielsweise die Phasenankopplung von unverträglichen Polymeren in Core-Shell-Latices bei deren Herstellung nach dem Emulsionspolymerisationsverfahren.

Peroxycarbonate mit allylischer Doppelbindung und deren Verwendung als Comonomere bei der Copolymerisation mit weiteren ethylenisch ungesättigten Monomeren werden in der DE-OS 2726008 beschrieben. Die DE-PS 3420048 betrifft Copolymerisate von Vinylacetat und Peroxyallylcarbonaten und deren Verwendung als Schlichtemittel für Glasfasern. Nachteilig ist, daß diese allylfunktionellen Peroxycarbonate, wenn überhaupt, nur sehr zögerlich mit anderen Vinylmonomeren copolymerisieren.

In der EP-A 277608 (US-A 4879347) und der EP-A 279430 (US-A 4839432) werden copolymerisierbare Peroxycarbonate mit (Meth)acrylat- und Allylether-Funktion als Comonomere zur Verbesserung der Phasenanbindung bei der Herstellung von Polymerblends beschrieben. Dabei wird das Peroxycarbonat mit Vinylmonomeren in Gegenwart eines Ethylencopolymeren im Suspensionspolymerisationsverfahren polymerisiert. Bei Erhitzen des Gemisches erfolgt die Kopplung der beiden Polymerphasen über die Peroxyfunktionen. Ein zur EP-A 279430 analoges Vorgehen wird in der US-A 4923956 beschrieben, mit dem Unterschied, daß Propylenpolymerisate statt der Ethylen-Polymere eingesetzt werden. Die EP-A 307802 betrifft Mischungen aus Polypropylen, einem weiteren Polymer und einem Copolymerisat aus Vinylmonomer und einem Peroxycarbonat mit Allylether- oder (Meth)acrylat-Funktion, deren Phasenanbindung durch Erhitzen auf Temperaturen von 200 bis 300°C verbessert wird. In der EP-B 225091 werden Allylether-substituierte Peroxydicarbonate als Initiatoren zur Herstellung von hochmolekularen, verzweigten VC-Polymerisaten beschrieben. Nachteilig bei den ebengenannten copolymerisierbaren Peroxyestern ist speziell bei den Allylverbindungen deren geringe Reaktivität bei der Copolymerisation mit anderen Vinylmonomeren. Weiter können die genannten Peroxyester erst ab Temperaturen von ≧ 130°C weitere Radikalreaktionen auslösen und sind damit für die Emulsionspolymerisation uninteressant.

Die bei W.C. Endstra, Kautschuk und Gummi, Kunststoffe **42**(5), 414 (1989) diskutierte Peroxyverbindung auf Methylstyrolbasis hat den Nachteil, daß sie mit vielen Vinylmonomeren nicht copolymerisiert werden kann und thermisch erst ab Temperaturen von ≧ 160°C weitere Radikalreaktionen ausgelöst werden. Gleiches gilt für das tert.-Butylperoxy-(p-(-vinylbenzoyl)benzoat (I. Gupta, S.N. Gupta, D.C. Neckers, J. Polym. Sci.: Polym. Chem. Ed. **20**, 147 (1982)), welches erst ab T ≧ 100°C thermisch weitere Radikalreaktionen auslöst und damit zur Copolymerisation im Emulsionspolymerisationsverfahren nicht eingesetzt werden kann.

Es bestand daher die Aufgabe olefinisch ungesättigte Peroxyverbindungen zur Verfügung zu stellen, die mit ethylenisch ungesättigten Monomeren copolymerisierbar sind, deren Peroxygruppe während der Copolymerisation erhalten bleibt und deren Peroxygruppen, nach dem Einbau in das Copolymerisat, bei Temperaturen ≦ 100°C weitere radikalische Polymerisationsreaktionen initiieren können. Weiter bestand die Aufgabe, diese Peroxyverbindungen enthaltenden Copolymerisate und die Pfropfcopolymerisate auf der Basis der peroxygruppenhaltigen Copolymerisate zur Verfügung zu stellen.

Überraschenderweise ist es gelungen, diese Aufgabe mit Peroxy-monovinylestern von aliphatischen Dicarbonsäuren und diese Peroxyverbindungen enthaltenden Copolymerisaten bzw. Pfropfcopolymerisaten zu lösen.

Ein Gegenstand der Erfindung sind Peroxy-monovinylester von aliphatischen Dicarbonsäuren mit den allgemeinen Formeln I oder II 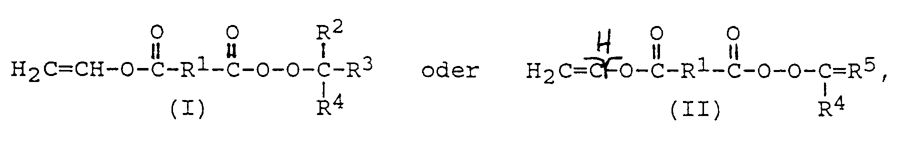
wobei R¹ für eine chemische Bindung oder für eine lineare oder verzweigte Alkylkette mit 1 bis 10 C-Atomen oder für eine Cycloalkylgruppe mit 3 bis 10 C-Atomen steht, R² und R³ eine Alkylgruppe mit 1 bis 4 C-Atomen bedeuten, R⁴ für eine Alkylgruppe oder eine alkylsubstituierte Phenylgruppe mit 1 bis 12 C-Atomen oder für eine Cycloalkylgruppe mit 3 bis 12 C-Atomen steht und R⁵ eine Cycloalkylgruppe mit 3 bis 12 C-Atomen bedeutet. Beispiele hierfür sind die t-Butylperoxy-monovinylester, die t-Amylperoxy-monovinylester, die Cumylperoxy-monovinylester und die Pinylperoxy-monovinylester der Oxalsäure, der Malonsäure, der Bernsteinsäure, der Glutarsäure, der Adipinsäure, der Pimelinsäure, der Suberinsäure, der Azelainsäure und der Sebacinsäure.

Bevorzugt werden Verbindungen der Formel I, wobei R¹ für (CH₂)ₙ mit n = 1 bis 4 und n = 8 steht, R² und R⁴ für eine Methylgruppe stehen und R³ für eine Methyl-, Ethyl- oder Phenylgruppe steht; dies sind die t-Butylperoxy-monovinylester, die t-Amylperoxy-monovinylester und die Cumylperoxy-monovinylester der Malonsäure, der Bernsteinsäure, der Glutarsäure, der Adipinsäure und der Sebacinsäure.

Besonders bevorzugt werden Verbindungen der Formel I, wobei R¹ (CH₂)ₙ mit n ist 2 bis 4 und n = 8 bedeutet und R², R³ und R⁴ eine Methylgruppe bedeuten; dies sind die t-Butylperoxy-monovinylester der Bernsteinsäure, der Glutarsäure, der Adipinsäure und der Sebacinsäure. Am meisten bevorzugt ist das t-Butylperoxy-monovinyladipat.

Die Herstellung der erfindungsgemäßen Dicarbonsäure-peroxymonovinylester erfolgt vorzugsweise ausgehend von den entsprechenden Dicarbonsäure-monovinylestern mit der allgemeinen Formel H₂C=CH-O-CO-R¹-COOH durch Veresterung der freien Säuregruppe mit dem entsprechenden Alkylhydroperoxid der allgemeinen Formel CR²R³R⁴-OOH oder R⁵=CR⁴-OOH, wobei die Reste R¹, R², R³, R⁴ und R⁵ die obengenannte Bedeutung haben. Denkbar sind auch Synthesewege ausgehend von den entsprechenden Dicarbonsäuremonovinylester-Anhydriden oder -Säurehalogeniden.

In einer besonders bevorzugten Ausführungsform wird die Veresterung in Gegenwart von Dicyclohexylcarbodiimid (DCCD) durchgeführt, wobei das Alkylhydroperoxid und DCCD jeweils in einem molaren Verhältnis von 1:1 bis 1:2, jeweils bezogen auf den Dicarbonsäuremonovinylester, eingesetzt werden. In der am meisten bevorzugten Ausführungsform werden der Dicarbonsäuremonovinylester, das Alkylhydroperoxid und das Dicyclohexylcarbodiimid in etwa äquimolaren Verhältnissen eingesetzt und bei einer Temperatur von 0 bis 40°C, gegebenenfalls in Gegenwart eines inerten Lösungsmittels wie Diethylether, miteinander umgesetzt.

Die erfindungsgemäßen olefinisch ungesättigten Peroxyverbindungen eignen sich zur Herstellung von Peroxidgruppen enthaltenden Copolymerisaten, die sich bei der Block- oder Pfropfcopolymerisation als "Makroinitiatoren" verhalten. Die freien Peroxidgruppen im Copolymerisat fungieren bei der Pfropfcopolymerisation als Ankergruppen und verbessern damit die Phasenanbindung unverträglicher Polymerphasen, beispielsweise in Core-Shell-Latices. Bei der Copolymerisation zur Herstellung der peroxidhaltigen Copolymerisate müssen die Reaktionsbedingungen allerdings so gewählt werden, daß die Peroxid-Bindung nicht aufgebrochen wird.

Ein weiterer Gegenstand der Erfindung sind Copolymerisate, welche die Peroxy-monovinylester gemäß Formel I oder II enthalten und Verfahren zu deren Herstellung. Die peroxidgruppenhaltigen Copolymerisate enthalten zwischen 0.01 bis 20 Gew% der erfindungsgemäßen olefinisch ungesättigten Peroxyverbindung und 80 bis 99.9 Gew% eines oder mehrerer Comonomere aus der Gruppe der (Meth)acrylsäureester von Alkoholen mit 1 bis 10 C-Atomen, Vinylester von gesättigten aliphatischen Carbonsäuren mit 2 bis 10 C-Atomen, Olefine, Vinylaromaten, Vinylhalogenide und/oder Vinylether, wobei sich die Angaben in Gew% jeweils auf das Gesamtgewicht des Copolymerisats beziehen. Vorzugsweise beträgt der Gehalt an Peroxyverbindung 0.01 bis 10 Gew%, besonders bevorzugt zwischen 0.01 und 5 Gew%.

Bevorzugte Basismonomere sind aus der Gruppe der Methacrylsäureester oder Acrylsäureester von Alkoholen mit 1 bis 10 C-Atomen Methylmethacrylat, Methylacrylat, Ethylmethacrylat, Ethylacrylat, Isopropylmethacrylat, Isopropylacrylat, tert.-Butylacrylat, n-Butylacrylat und Ethylhexylacrylat; aus der Gruppe der Vinylester von gesättigten aliphatischen Carbonsäuren mit 2 bis 10 C-Atomen Vinylacetat, Isopropenylacetat, Vinylpropionat, Vinyllaurat und Versaticsäure^{R}-Vinylester mit 9 bis 10 C-Atomen (Vinylester von gesättigten α-verzweigten Monocarbonsäuren, Handelsprodukt der Fa. Shell); aus der Gruppe der Olefine Ethylen, Propylen und 1,3-Butadien; aus der Gruppe der Vinylhalogenide Vinylchlorid und Styrol als bevorzugtes Vinylaromat.

Gegebenenfalls können die erfindungsgemäßen Copolymerisate als Basismonomere noch bis zu 10 Gew%, bezogen auf das Copolymerisat, ethylenisch ungesättigte, funktionelle Comonomere enthalten. Beispiele hierfür sind Mono- oder Dicarbonsäuren wie Methacrylsäure, Acrylsäure oder Fumarsäure und deren Amide, hydroxyfunktionelle Monomere wie Hydroxyethylacrylat, 2-Hydroxypropylacrylat oder N-Methylolacrylamid, sulfonatfunktionelle Monomere wie Vinylsulfonat oder 2-Acrylamido-2-methyl-propansulfonat und mehrfach ungesättigte Monomere wie Divinyladipat.

Besonders bevorzugt sind Copolymerisate mit einem oder mehreren Comonomeren aus der Gruppe Vinylacetat, Isopropenylacetat, Vinylpropionat, Vinyllaurat, Vinylchlorid und/oder Ethylen sowie einer oder mehrerer olefinisch ungesättigter Peroxyverbindungen aus der Gruppe der t-Butyl-, t-Amyl- bzw. Cumyl-peroxy-monovinylester der Malonsäure, der Bernsteinsäure, der Glutarsäure, und/oder der Adipinsäure. Am meisten bevorzugt sind Copolymerisate enthaltend 0 bis 50 Gew% Ethylen, mindestens 50 Gew% Vinylacetat und 0.01 bis 5 Gew% t-Butylperoxy-monovinyladipat, wobei sich die Angaben in Gew% auf das Gesamtgewicht des Copolymerisats beziehen und sich auf 100 Gew% aufaddieren.

Die peroxygruppenhaltigen Copolymerisate werden durch radikalische Polymerisation in Masse, in Lösung, in Suspension oder in Emulsion hergestellt. Von den genannten Verfahren ist die Emulsionspolymerisation die bevorzugte Variante. Die Polymerisation kann diskontinuierlich oder kontinuierlich, mit oder ohne Verwendung von Saatlatices, unter Vorlage aller oder einzelner Bestandteile des Reaktionsgemisches, oder unter teilweiser Vorlage und Nachdosierung der oder einzelner Bestandteile des Reaktionsgemisches, oder nach dem Dosierverfahren ohne Vorlage durchgeführt werden. Alle Dosierungen erfolgen vorzugsweise im Maße des Verbrauchs der jeweiligen Komponente.

Die Polymerisation wird durch Radikalbildner in einem Temperaturbereich von 0 bis 80°C initiiert, da bei höherer Temperatur ein nennenswerter Zerfall der Peroxygruppen im Copolymerisat auftritt. Vorzugsweise wird die Polymerisation bei Temperaturen bis zu 70°C ausgeführt.

Bei der bevorzugten Emulsionspolymerisation erfolgt die Initiierung mittels wasserlöslicher Radikalbildner, die vorzugsweise in Mengen von 0.01 bis 3.0 Gew%, bezogen auf das Gesamtgewicht der Monomeren, eingesetzt werden. Beispiele hierfür sind Ammonium- und Kaliumpersulfat, -peroxodisulfat; Wasserstoffperoxid; Azoverbindungen, wie Azobisisobutyronitril oder Azobiscyanovaleriansäure. Besitzt der wasserlösliche Radikalbildner ein höheres Oxidationspotential als das copolymerisierbare Peroxid der Formeln (I) oder (II), beispielsweise im Fall von t-Butylhydroperoxid oder Kalium-, Natrium- und Ammoniumperoxodisulfat, so kann die Radikalbildung bei niedrigeren Temperaturen mit Hilfe von reduzierenden Agenzien beschleunigt werden.

Als Dispergiermittel können alle üblicherweise bei der Emulsionspolymerisation verwendeten Emulgatoren und Schutzkolloide eingesetzt werden. Vorzugsweise werden 1 bis 6 Gew%, bezogen auf das Gesamtgewicht der Monomeren, an Emulgator eingesetzt. Geeignet sind beispielsweise anionische Tenside, wie Alkylsulfate mit einer Kettenlänge von 8 bis 18 C-Atomen, Alkyl- und Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen. Geeignete nichtionische Tenside sind beispielsweise Alkylpolyglykolether oder Alkylarylpolyglykolether mit 8 bis 40 Ethylenoxideinheiten.

Gegebenenfalls können Schutzkolloide, vorzugsweise in Mengen bis zu 15 Gew%, bezogen auf das Gesamtgewicht der Monomeren, eingesetzt werden. Beispiele hierfür sind Vinylalkohol/Vinylacetat-Copolymere mit einem Gehalt von 80 bis 100 Mol% Vinylalkoholeinheiten, Polyvinylpyrrolidone mit einem Molekulargewicht von 5000 bis 400000, Hydroxyethylcellulosen mit einem Substitutionsgradbereich von 1.5 bis 3.

Der für die Polymerisation gewünschte pH-Bereich, der im allgemeinen zwischen 2.5 und 10, vorzugsweise 3 und 8, liegt, kann in bekannter Weise durch Säuren, Basen oder übliche Puffersalze, wie Alkaliphosphate oder Alkalicarbonate, eingestellt werden. Zur Molekulargewichtseinstellung können bei der Polymerisation die üblicherweise verwendeten Regler, zum Beispiel Mercaptane, Aldehyde und Chlorkohlenwasserstoffe zugesetzt werden.

Die peroxidhaltigen Copolymerisate eignen sich als Pfropfgrundlage zur Herstellung von Pfropfcopolymerisaten, Blockcopolymerisaten und von Core-Shell-Dispersionsteilchen mit verbesserter Phasenanbindung zwischen den Polymerphasen.

Ein weiterer Gegenstand der Erfindung sind Pfropfcopolymerisate, hergestellt aus
a) einer aufgepfropften Polymerphase, enthaltend ein oder mehrere Monomere aus der Gruppe (Meth)acrylsäureester von Alkoholen mit 1 bis 10 C-Atomen, Vinylester von gesättigten aliphatischen Carbonsäuren mit 2 bis 10 C-Atomen, Olefine, Vinylhalogenide und Styrol sowie Styrolderivate, und
b) aus einer peroxygruppenhaltigen Copolymerphase, enthaltend 0.01 bis 20 Gew% der erfindungsgemäßen olefinisch ungesättigten Peroxyverbindung und 80 bis 99.9 Gew% eines oder mehrerer Comonomere aus der Gruppe der (Meth)acrylsäureester von Alkoholen mit 1 bis 10 C-Atomen, Vinylester von gesättigten aliphatischen Carbonsäuren mit 2 bis 10 C-Atomen, Olefine, Vinylaromaten, Vinylhalogenide und/oder Vinylether.

Bevorzugte Monomere der Pfropfmonomerphase aus der Gruppe (Meth)acrylsäureester von Alkoholen mit 1 bis 10 C-Atomen sind Methylmethacrylat, Methylacrylat, Ethylmethacrylat, Ethylacrylat, Isopropylmethacrylat, Isopropylacrylat, t-Butylacrylat, n-Butylacrylat und Ethylhexylacrylat. Bevorzugte Vinylester von gesättigten aliphatischen Carbonsäuren mit 2 bis 10 C-Atomen sind Vinylacetat, Vinylpropionat und Vinyllaurat. Bevorzugte Olefine sind Ethylen und Propylen. Als Vinylhalogenid wird Vinylchlorid bevorzugt eingesetzt. Besonders bevorzugt sind Styrol und Methylmethacrylat. Darüber hinaus kann die Pfropfmonomerphase gegebenenfalls noch bis zu 10 Gew%, bezogen auf die Pfropfmonomerphase, der bereits genannten ethylenisch ungesättigten, funktionellen Comonomere enthalten.

Bevorzugte Pfropfcopolymerisate sind solche, hergestellt aus einer Pfropfgrundlage enthaltend ein oder mehrere Comonomere aus der Gruppe Vinylacetat, Isopropenylacetat, Vinylpropionat, Vinyllaurat, Vinylchlorid und/oder Ethylen, welche 0.01 bis 10 Gew% einer oder mehrerer olefinisch ungesättigter Peroxyverbindungen aus der Gruppe der t-Butyl-, t-Amyl- bzw. Cumyl-peroxy-monovinylester der Malonsäure, der Bernsteinsäure, der Glutarsäure, und/oder der Adipinsäure enthält und einer aufgepfropften Polymerphase aus (Meth)acrylsäureester von Alkoholen mit 1 bis 10 C-Atomen, Vinylester von gesättigten aliphatischen Carbonsäuren mit 2 bis 10 C-Atomen, Vinylhalogeniden, Styrol und/oder Styrolderivaten.

Besonders bevorzugt sind Pfropfcopolymerisate hergestellt aus einer Pfropfgrundlage, welche 0 bis 50 Gew% Ethylen, mindestens 50 Gew% Vinylacetat und 0.01 bis 5 Gew% t-Butylperoxy-monovinyladipat enthält, und einer aufgepfropften Polymerphase, welche Styrol oder Methylmethacrylat enthält.

Die Pfropfung kann in Masse, Lösung, Suspension oder Emulsion erfolgen. Vorzugsweise erfolgt sie nach dem Emulsionspolymerisationsverfahren. Zur Pfropfcopolymerisation wird das peroxydhaltige Copolymerisat vorgelegt, vorzugsweise in Form eines Saatlatex. Die Pfropfmonomerphase kann vorgelegt oder, beispielsweise als Voremulsion, dosiert werden. Die Zugabemenge des Propfmonomeren wird so eingestellt, daß im fertigen Propfprodukt zwischen 1 und 99 Gew.% dieser Monomereinheiten enthalten sind.

Die Pfropfcopolymerisation erfolgt bei Temperaturen ≧ 80°C, vorzugsweise ≧ 90°C ohne weitere Zugabe von Initiatoren, da die peroxydhaltigen Copolymerisate als Makroinitiatoren die Pfropfreaktion initiieren. Die Pfropfcopolymerisation erfolgt vorzugsweise unter Zusatz von 0.1 bis 5.0 Gew.% Emulgator, bezogen auf das Gesamtgewicht des Pfropfcopolymerisats.

Eine weitere Aufarbeitung des Pfropfcopolymerlatex kann beispielsweise durch Sprühtrocknung, Walzentrocknung oder durch Koagulation mit anschließender Trocknung erfolgen.

Die Pfropfcopolymerlatices eignen sich zur Verwendung als Bindemittel im Textilbereich (non-wovens), als wärmestabile Binder z.B. bei Dachbahnen-Beschichtungen, als Klebemittel in Putzen und als Bindemittel in Dispersionsfarben. Pfropfcopolymerharze, die durch Koagulation bzw. Sprühtrocknung gewonnen wurden, eignen sich als Schlagzähmodifier in Kunststoffen, als Phasenvermittler bei Polymerblends, als "Low Profile Additives" in UP-Harzen und zur Verwendung als thermoplastische Elastomere.

Die nachfolgenden Beispiele dienen zur weiteren Erläuterung der Erfindung:

### Beispiel 1:

In einem 250 ml Kolben mit Magnetrührer, Tropftrichter und Innenthermometer wurden 6.1 g (29.56 mmol) Dicyclohexylcarbodiimid in 14 ml Diethylether gelöst. 5.0 g (29.04 mmol) Monovinyladipat wurden in 30 ml Diethylether gelöst und unter intensivem Rühren langsam zugetropft. Bereits nach kurzer Zeit hatte sich ein weißer, flockiger Niederschlag gebildet. Sobald die Monovinyladipat-Zugabe beendet war, wurde das Gemisch auf unter 5°C abgekühlt und der entstandene Niederschlag durch Zugabe von 20 ml Dichlormethan aufgelöst. Dann wurden 4.4 g (29.04 mmol) t-Butylhydroperoxid langsam zugetropft und anschließend 5 Stunden lang bei Temperaturen unter 5°C gerührt und der Ansatz über Nacht in der Kälte stehengelassen. Zur Aufarbeitung wurde das Gemisch über eine Nutsche abgesaugt. Der Rückstand wurde mit wenig Dichlormethan nachgewaschen und die entstandene klare Lösung am Rotationsverdampfer eingeengt. Es resultierte eine klare Flüssigkeit, die sich bei Temperaturen über 60°C zersetzt.
¹H-NMR (CDCl₃):
1.320 ppm, s, 9H; 1.705 ppm, m, 4H; 2.394 ppm, m, 4H; 4.574 ppm, m, 1H; 4.877 ppm, m, 1H; 7.200 ppm, m, 1H.

### Beispiel 2:

In Analogie zu Beispiel 1 wurden in einem 250 ml Kolben 6.1 g (29,56 mmol) Dicyclohexylcarbodiimid in 14 ml Diethylether gelöst. 6.66 g (29.04 mmol) Monovinylsebacinat wurden in ca. 30 ml Diethylether gelöst und unter intensivem Rühren langsam zugetropft. Die Reaktionsführung erfolgte exakt nach dem im Beispiel 1 beschriebenen Verfahren. Es resultierte eine klare Flüssigkeit, die sich bei Temperaturen unterhalb von 0°C verfestigt und sich oberhalb von 60°C zersetzt.
¹H-NMR (CDCl₃):
1.1-1.4 ppm, m, 17H, 1.51-1.73 ppm, m, 4H, 2.36-2.51 ppm, m, 4H, 4.573 ppm, m, 1H, 4.879 ppm, m, 1H, 7.15-7.3 ppm, m, 1H.

### Beispiel 3:

In Analogie zu Beispiel 1 wurden in einem 250 ml Kolben 6.1 g (29.56 mmol) Dicyclohexylcarbodiimid in 14 ml Diethylether gelöst. 4.62 g (29.04 mmol) Monovinylglutarat wurden in ca. 30 ml Diethylether gelöst und unter intensivem Rühren langsam zugetropft. Die Reaktionsführung erfolgte exakt nach dem im Beispiel 1 beschriebenen Verfahren. Es resultierte eine klare Flüssigkkeit, die sich bei Temperaturen oberhalb von 60°C zersetzt.
¹H-NMR (CDCl₃):
1.32 ppm, s, 9H, 1.95-2.07 ppm, m, 2H, 2.43-2.56 ppm, m, 4H, 4.571 ppm, m, 1H, 4.875 ppm, m, 1H, 7.15-7.3 ppm, m, 1H.

### Beispiel 4:

Zunächst wurden vier Lösungen vorbereitet: 1. Initiatorlösung: 0.45 Gew.teile Kaliumpersulfat wurden in 14.6 Gew.teilen Wasser gelöst. 2. Monomere: 0.4 Gew.teile Divinyladipat wurden in 84.9 Gew.teilen Vinylacetat gelöst. 3. Voremulsion: 0.8 Gew.teile Na-2-Acrylamido-2-methyl-propansulfonat und 2.2 Gew.teile eines Diisohexylsulfosuccinats (Aerosol MA 80 der Fa. Cyanamid) wurden in 40 Gew.teilen Wasser emulgiert. 4. Peroxidlösung: 1.95 Gew.teile t-Butylperoxy-monovinyladipat (Beispiel 1) wurden in 1.95 Gew.teilen Vinylacetat aufgelöst.

In einem Rührautoklaven wurden 9.75 Gew.teile Vinylacetat, 0.05 Gew.teile Dinvinyladipat, 0.25 Gew.teile Vinylsulfonat, 0.515 Gew.teile eines Diisohexyl-sulfosuccinats (Aerosol MA 80 der Fa. Cyanamid) und 0.125 Gew.teile Kaliumpersulfat in 87 Gew.teilen Wasser vorgelegt, auf 70°C erwärmt und mit 80 bar Ethylen beschickt. Nach Erreichen des Temperaturgleichgewichts wurden die oben beschriebenen Lösungen 1 bis 3 dosiert. Die Dosierraten wurden entsprechend einer Dosierzeit von 5 h im Falle der Monomeren (2.) und einer Dosierzeit von 6 h in Falle des Initiators (1.) und der Voremulsion (3.) gewählt. Nach Dosierende der Monomeren (2.) wurde die Peroxidlösung (4.) innerhalb einer Stunde zudosiert.

Es resultierte eine feindisperse Dispersion mit einem Festgehalt von 46 Gew% und einer monomodalen Teilchengrößenverteilung, wobei die mittlere Teilchengröße 168 nm betrug. Das Copolymerisat hatte einen Ethylengehalt von 41 Gew% und einen aktiven Sauerstoffgehalt von 0.085 %. Die Glasübergangstemperatur des Polymerharzes (DSC) lag bei -21°C, sein K-Wert (in Tetrahydrofuran THF gemessen) betrug 40.1.

### Beispiel 5:

Es wurde in Analogie zum Beispiel 4 vorgegangen mit dem Unterschied, daß t-Butylperoxy-monovinyladipat über den gesamten Reaktionszeitraum zusammen mit der Vinylacetatphase dosiert wurde. Dazu wurden drei Lösungen vorbereitet: 1. Initiatorlösung: 0.45 Gew.teile Kaliumpersulfat wurden in 14.6 Gew.teilen Wasser gelöst. 2. Monomere: 0.4 Gew.teile Divinyladipat und 1.95 Gew.teile t-Butylperoxy-monovinyladipat (Beispiel 1) wurden in 86.8 Gew.teilen Vinylacetat gelöst. 3. Voremulsion: 0.8 Gew.teile Na-2-Acrylamido-2-methylpropansulfonat und 2.2 Gew.teile eines Diisohexylsulfosuccinats (Aerosol MA 80 der Fa. Cyanamid) wurden in 40 Gew.teilen Wasser emulgiert.

In einem Rührautoklaven wurden 9.75 Gew.teile Vinylacetat, 0.05 Gew.teile Divinyladipat, 0.25 Gew.teile Vinylsulfonat, 0.515 Gew.teile eines Diisohexyl-sulfosuccinats (Aerosol MA 80 der Fa. Cyanamid) und 0.125 Gew.teile Kaliumpersulfat in 87 Gew.teilen Wasser vorgelegt, auf 70°C erwärmt und mit 80 bar Ethylen beschickt. Nach Erreichen des Temperaturgleichgewichts wurden die oben beschriebenen Lösungen 1 bis 3 dosiert. Die Dosierraten wurden entsprechend einer Dosierzeit von 6 h gewählt.

Es resultierte eine feindisperse Dispersion mit einem Festgehalt von 47.6 Gew% und einer monomodalen Teilchengrößenverteilung, wobei die mittlere Teilchengröße 179 nm betrug. Das Copolymerisat hatte einen Ethylengehalt von 31 Gew% und einen aktiven Sauerstoffgehalt von 0.226%. Die Glasübergangstemperatur des Polymerharzes (DSC) lag bei -16°C, sein K-Wert (in Tetrahydrofuran THF gemessen) betrug 40.3.

### Beispiel 6:

Zur Pfropfpolymerisation wurden in einem Polymerisationskessel 10 Gew.teile des peroxidgruppenhaltigen Copolymerisats aus Beispiel 4 in Form einer 6%igen wäßrigen Dispersion zusammen mit 0.005 Gew.teilen Eisen(II)-ammoniumsulfat vorgelegt, auf 90°C erhitzt und unter Rühren über einen Zeitraum von 2 Stunden eine Voremulsion bestehend aus 89.55 Gew.teilen Styrol, 0.45 Gew.teilen Acrylsäure und 2 Gew.teilen Aerosol MA in 45 Gew.teilen Wasser zudosiert. Nach Dosierende wurde die Pfropfpolymerisation bei 93°C vervollständigt. Es resultierte eine 39.5 %ige Polymerdispersion mit einem Restmonomergehalt von 1.3 Gew% und einer mittleren Teilchengröße von 330 nm bei einer engen, monomodalen Teilchengrößenverteilung. Der K-Wert des Harzes lag bei 65.1, der unlösliche Anteil in Essigsäureethylester betrug 29.7 Gew.%.

### Beispiel 7:

Es wurde analog zu Beispiel 6 vorgegangen, mit dem Unterschied, daß 20 Gew.teile des peroxidgruppenhaltigen Copolymerisats aus Beispiel 5 in Form einer 11 %igen wäßrigen Dispersion vorgelegt und 79.6 Gew.teile Styrol, 0.4 Gew.teile Acrylsäure und 1.4 Gew.teile Aerosol MA in 40 Gew.teilen Wasser zudosiert wurden. Es resultierte eine 42.6 %ige Polymerdisperion mit einem Restmonomergehalt von 0.78 Gew% und einer mittleren Teilchengröße von 289 nm bei einer engen, monomodalen Teilchengrößenverteilung. Der K-Wert des Polymerharzes lag bei 61.1, der unlösliche Anteil in Essigsäureethylester betrug 27.8 Gew.%.

### Beispiel 8:

Es wurde analog zu Beispiel 6 vorgegangen, mit dem Unterschied, daß 90 Gew.teile des peroxidgruppenhaltigen Copolymerisats aus Beispiel 5 in Form einer 36 %igen wäßrigen Dispersion vorgelegt und 9.95 Gew.teile Styrol, 0.05 Gew.-teile Acrylsäure und 0.1 Gew.teile Aerosol MA in 5 Gew.teilen Wasser zudosiert wurden. Es resultierte eine 43 %ige Polymerdispersion mit einem Restmonomergehalt von 0.26 Gew.% und einer mittleren Teilchengröße von 195 nm bei einer engen, monomodalen Teilchengrößenverteilung. Der K-Wert des Harzes betrug 42.1.

### Vergleichsbeispiel 1:

Es wurde ein Copolymerisat analog zu Beispiel 5 hergestellt, wobei kein t-Butylperoxy-monovinyladipat copolymerisiert wurde. Dazu wurden drei Lösungen vorbereitet: 1. Initiatorlösung: 0.45 Gew.teile Kaliumpersulfat wurden in 14.6 Gew.-teilen Wasser gelöst. 2. Monomere: 0.4 Gew.teile Divinyladipat wurden in 88.8 Gew.teilen Vinylacetat gelöst. 3. Voremulsion: 0.8 Gew.teile Na-2-Acrylamido-2-methylpropan-sulfonat und 2.2 Gew.teile eines Diisohexylsulfosuccinats (Aerosol MA 80 der Fa. Cyanamid) wurden in 40 Gew.teilen Wasser emulgiert.

In einem Rührautoklaven wurden 9.75 Gew.teile Vinylacetat, 0.05 Gew.teile Divinyladipat, 0.25 Gew.teile Vinylsulfonat, 0.515 Gew.teile eines Diisohexyl-sulfosuccinats (Aerosol MA 80 der Fa. Cyanamid) und 0.125 Gew.teile Kaliumpersulfat in 87 Gew.teilen Wasser vorgelegt, auf 70°C erwärmt und mit 80 bar Ethylen beschickt. Nach Erreichen des Temperaturgleichgewichts wurden die oben beschriebenen Lösungen 1 bis 3 dosiert. Die Dosierraten wurden entsprechend einer Dosierzeit von 6 h gewählt.

Es resultierte eine feindisperse Dispersion mit einem Festgehalt von 43 Gew.% und einer monomodalen Teilchengrößenverteilung, wobei die mittlere Teilchengröße 178 nm betrug. Das Copolymerisat hatte einen Ethylengehalt von 36 Gew.% und einen aktiven Sauerstoffgehalt von 0 %. Die Glasübergangstemperatur des Polymerharzes (DSC) lag bei -25.4°C, sein K-Wert (in Tetrahydrofuran THF gemessen) betrug 39.4.

### Vergleichsbeispiel 2:

Es wurde analog zum Beispiel 6 vorgegangen, wobei als Pfropfgrundlage 10 Gew.teile des Copolymeren aus Vergleichsbeispiel 1 in Form einer 6 %igen Dispersion vorgelegt wurden. Zu Initiierung der Pfropfreaktion wurde in der Voremulsion eine den Peroxidgruppen des Copolymeren aus Beispiel 4 äquivalente Menge an Initiator, nämlich 0.516 Gew.teile t-Butylperoxy-pivalat und 0.174 Gew.teile t-Butyl-peroxy-2-ethylhexanoat zusammen mit 89.55 Gew.teilen Styrol, 0.45 Gew.teilen Acrylsäure und 2.0 Gew.teilen Aerosol MA in 40 Gew.teilen Wasser zudosiert. Es resultierte eine 41.8 %ige Polymerdispersion mit einem Restmonomergehalt von 0.78 Gew% und einer mittleren Teilchengröße von 368 nm bei einer breiten monomodalen Teilchengrößenverteilung. Der K-Wert des Polymerharzes lag bei 50.2, der unlösliche Anteil in Essigsäureethylester betrug 2.5 Gew%.

### Vergleichsbeispiel 3:

Es wurde analog zum Beispiel 7 vorgegangen, wobei als Pfropfgrundlage 20 Gew.teile des Copolymeren aus Vergleichsbeispiel 1 in Form einer 12 %igen Dispersion vorgelegt wurden. Zu Initiierung der Pfropfreaktion wurde in der Voremulsion eine den Peroxidgruppen des Copolymeren aus Beispiel 5 äquivalente Menge an Initiator, nämlich 0.516 Gew.teile t-Butylperoxy-pivalat und 0.174 Gew.teile t-Butyl-peroxy-2-ethylhexanoat zusammen mit 79.6 Gew.teilen Styrol, 0.40 Gew.teilen Acrylsäure und 1.40 Gew.teilen Aerosol MA in 30 Gew.teilen Wasser zudosiert. Es resultierte eine 44.0 %ige Polymerdispersion mit einem Restmonomergehalt von 0.57 Gew% und einer mittleren Teilchengröße von 310 nm bei einer engen, monomodalen Teilchengrößenverteilung. Der K-Wert des Polymerharzes lag bei 51.6, der unlösliche Anteil in Essigsäureethylester betrug 8.8 Gew.%.

Aus den Beispielen 6 und 7 sowie den Vergleichsbeispielen 2 und 3 wird deutlich, daß das Molekulargewicht (siehe K-Wert) der Pfropfpolymerisate im Falle der Pfropfung auf die peroxidhaltigen Copolymerisate ("Makroinitiatoren") deutlich gesteigert wurde. Auch der in Essigsäureethylester unlösliche Anteil der Pfropfprodukte ist bei den peroxidhaltigen Produkten deutlich erhöht und beweist die verbesserte Ankopplung der Polystyrolphase an die EVAc-Phase.

## Patentansprüche (Patentansprüche für folgende(n) Vertragsstaat(en): DE, FR, GB, IT, NL, SE)

1. Pfropfcopolymerisate mit verbesserter Phasenanbindung zwischen Pfropfgrundlage und aufgepfropfter Polymerphase, hergestellt aus
a) einer aufgepfropften Polymerphase enthaltend ein oder mehrere Monomere aus der Gruppe (Meth)-acrylsäureester von Alkoholen mit 1 bis 10 C-Atomen, Vinylester von gesättigten aliphatischen Carbonsäuren mit 2 bis 10 C-Atomen, Olefine, Vinylhalogenide und Styrol sowie Styrolderivate, und
b) aus einer peroxygruppenhaltigen Copolymerphase enthaltend
0.01 bis 20 Gew% einer olefinisch ungesättigten Peroxyverbindung der allgemeinen Formel I oder II 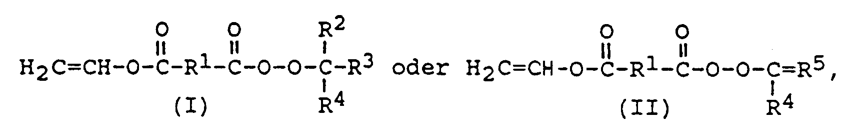 wobei R¹ für eine chemische Bindung oder für eine lineare oder verzweigte Alkylkette mit 1 bis 10 C-Atomen oder für eine Cycloalkylgruppe mit 3 bis 10 C-Atomen steht, R² und R³ eine Alkylgruppe mit 1 bis 4 C-Atomen bedeuten, R⁴ für eine Alkylgruppe oder eine alkylsubstituierte Phenylgruppe mit 1 bis 12 C-Atomen oder für eine Cycloalkylgruppe mit 3 bis 12 C-Atomen steht und R⁵ eine Cycloalkylgruppe mit 3 bis 12 C-Atomen bedeutet, und 80 bis 99.9 Gew% eines oder mehrerer Comonomere aus der Gruppe der (Meth)acrylsäureester von Alkoholen mit 1 bis 10 C-Atomen, Vinylester von gesättigten aliphatischen Carbonsäuren mit 2 bis 10 C-Atomen, Olefine, Vinylaromaten, Vinylhalogenide und/oder Vinylether.

2. Pfropfcopolymerisate nach Anspruch 1, dadurch gekennzeichnet, daß R¹ für (CH₂)ₙ mit n = 1 bis 4 und n = 8 steht, R² und R⁴ für eine Methylgruppe stehen und R³ für eine Methyl-, Ethyl-oder Phenylgruppe steht.

3. Pfropfcopolymerisate nach Anspruch 1 oder 2, dadurch gekennzeichnet, daß die aufgepfropfte Polymerphase a) Styrol oder Methylmethacrylat enthält und die Copolymerphase b) 0 bis 50 Gew% Ethylen, mindestens 50 Gew% Gew% Vinylacetat und 0.01 bis 5 Gew% t-Butylperoxy-monovinyladipat enthält.

4. Verfahren zur Herstellung der Pfropfcopolymerisate nach Anspruch 1, 2 oder 3, dadurch gekennzeichnet, daß die peroxygruppenhaltigen Copolymerisate b) mit 1 bis 99 Gew%, bezogen auf das Gesamtgewicht des Pfropfcopolymerisats, eines oder mehrerer Monomere aus der Gruppe a), durch radikalische Polymerisation in Masse, in Lösung, in Suspension oder in Emulsion, bei einer Temperatur von ≧ 80°C, gepfropft werden.

5. Verfahren nach Anspruch 4, dadurch gekennzeichnet, daß die Pfropfung nach dem Emulsionspolymerisationsverfahren, unter Zusatz von 0.1 bis 5.0 Gew% Emulgator erfolgt.

6. Peroxygruppenhaltige Copolymerisate enthaltend 0.01 bis 20 Gew% Peroxy-monovinylester der Formel 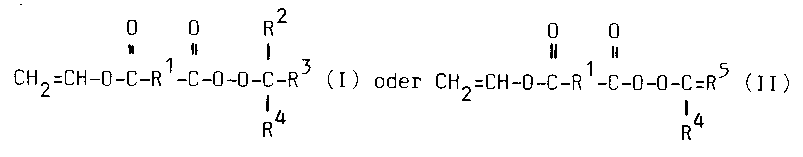 wie in Anspruch 1 definiert und 80 bis 99.9 Gew% eines oder mehrerer Comonomere aus der Gruppe der (Meth)acrylsäureester von Alkoholen mit 1 bis 10 C-Atomen, Vinylester von gesättigten aliphatischen Carbonsäuren mit 2 bis 10 C-Atomen, Olefine, Vinylaromaten, Vinylhalogenide und/oder Vinylether.

7. Peroxygruppenhaltige Copolymerisate nach Anspruch 6, dadurch gekennzeichnet, daß die Copolymerisate 0.01 bis 20 Gew% Peroxy-monovinylester der Formel I oder II und 80 bis 99.9 Gew% eines oder mehrerer Comonomere aus der Gruppe Vinylacetat, Isopropenylacetat, Vinylpropionat, Vinyllaurat, Vinylchlorid und/oder Ethylen enthalten.

8. Peroxygruppenhaltige Copolymerisate nach Anspruch 6 oder 7, dadurch gekennzeichnet, daß die Copolymerisate zusammengesetzt sind aus 0 bis 50 Gew% Ethylen, mindestens 50 Gew% Gew% Vinylacetat und 0.01 bis 5 Gew% t-Butylperoxy-monovinyladipat.

9. Verfahren zur Herstellung der peroxygruppenhaltigen Copolymerisate nach Anspruch 6, 7 oder 8 durch radikalische Polymerisation in Masse, in Lösung, in Suspension oder in Emulsion bei einer Temperatur von 0 bis 80°C.

10. Verfahren nach Anspruch 9, dadurch gekennzeichnet, daß die Herstellung im Emulsionspolymerisationsverfahren durchgeführt wird.

11. Peroxy-monovinylester von aliphatischen Dicarbonsäuren mit der allgemeinen Formel I oder II 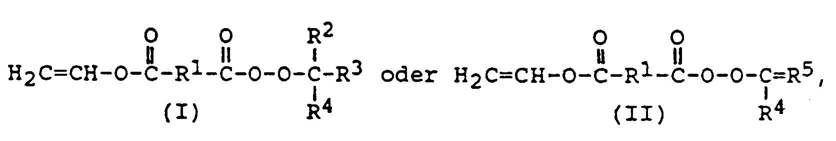 wobei R¹ für eine chemische Bindung oder für eine lineare oder verzweigte Alkylkette mit 1 bis 10 C-Atomen oder für eine Cycloalkylgruppe mit 3 bis 10 C-Atomen steht, R² und R³ eine Alkylgruppe mit 1 bis 4 C-Atomen bedeuten, R⁴ für eine Alkylgruppe oder eine alkylsubstituierte Phenylgruppe mit 1 bis 12 C-Atomen oder für eine Cycloalkylgruppe mit 3 bis 12 C-Atomen steht und R⁵ eine Cycloalkylgruppe mit 3 bis 12 C-Atomen bedeutet.

12. Peroxy-monovinylester der Formel I nach Anspruch 11, dadurch gekennzeichnet, daß R¹ für (CH₂)ₙ mit n = 1 bis 4 und n = 8 steht, R² und R⁴ für eine Methylgruppe stehen und R³ für eine Methyl-, Ethyl- oder Phenylgruppe steht.

13. Peroxy-monovinylester der Formel I nach Anspruch 11 oder 12, dadurch gekennzeichnet, daß R¹ (CH₂)ₙ mit n ist 2 bis 4 und n = 8 bedeutet und R², R³ und R⁴ eine Methylgruppe bedeuten.

14. Peroxy-monovinylester der Formel I nach Anspruch 11, 12 oder 13, dadurch gekennzeichnet, daß R¹ (CH₂)₄ bedeutet und R², R³ und R⁴ eine Methylgruppe bedeuten.

15. Verfahren zur Herstellung der Peroxy-monovinylester nach Anspruch 11 bis 14, dadurch gekennzeichnet, daß die Dicarbonsäure-monovinylester mit der allgemeinen Formel H₂C=CH-O-CO-R¹-COOH oder deren Säurechloride bzw. Säureanhydride mit Alkylhydroperoxid der allgemeinen Formel CR²R³R⁴-OOH oder R⁵=CR⁴-OOH verestert werden.

16. Verfahren nach Anspruch 15, dadurch gekennzeichnet, daß die Veresterung in Gegenwart von Dicyclohexylcarbodiimid (DCCD) durchgeführt wird, wobei das Alkylhydroperoxid und DCCD jeweils in einem molaren Verhältnis von 1:1 bis 1:2, jeweils bezogen auf den Dicarbonsäuremonovinylester, eingesetzt werden und bei einer Temperatur von 0 bis 40°C, gegebenenfalls in Gegenwart eines inerten Lösungsmittels, miteinander umgesetzt werden.

## Patentansprüche (Patentansprüche für folgende(n) Vertragsstaat(en): ES)

1. Verfahren zur Herstellung von Pfropfcopolymerisaten mit verbesserter Phasenanbindung zwischen Pfropfgrundlage und aufgepfropfter Polymerphase, hergestellt aus
a) einer aufgepfropften Polymerphase enthaltend ein oder mehrere Monomere aus der Gruppe (Meth)-acrylsäureester von Alkoholen mit 1 bis 10 C-Atomen, Vinylester von gesättigten aliphatischen Carbonsäuren mit 2 bis 10 C-Atomen, Olefine, Vinylhalogenide und Styrol sowie Styrolderivate, und
b) aus einer peroxygruppenhaltigen Copolymerphase enthaltend
0.01 bis 20 Gew% einer olefinisch ungesättigten Peroxyverbindung der allgemeinen Formel I oder II 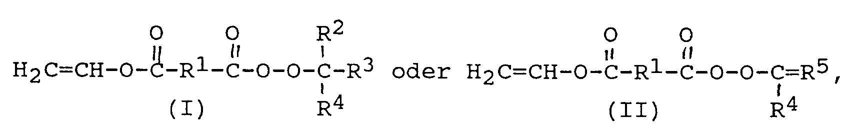 wobei R¹ für eine chemische Bindung oder für eine lineare oder verzweigte Alkylkette mit 1 bis 10 C-Atomen oder für eine Cycloalkylgruppe mit 3 bis 10 C-Atomen steht, R² und R³ eine Alkylgruppe mit 1 bis 4 C-Atomen bedeuten, R⁴ für eine Alkylgruppe oder eine alkylsubstituierte Phenylgruppe mit 1 bis 12 C-Atomen oder für eine Cycloalkylgruppe mit 3 bis 12 C-Atomen steht und R⁵ eine Cycloalkylgruppe mit 3 bis 12 C-Atomen bedeutet, und 80 bis 99.9 Gew% eines oder mehrerer Comonomere aus der Gruppe der (Meth)acrylsäureester von Alkoholen mit 1 bis 10 C-Atomen, Vinylester von gesättigten aliphatischen Carbonsäuren mit 2 bis 10 C-Atomen, Olefine, Vinylaromaten, Vinylhalogenide und/oder Vinylether,
dadurch gekennzeichnet, daß die peroxygruppenhaltigen Copolymerisate b) mit 1 bis 99 Gew%, bezogen auf das Gesamtgewicht des Pfropfcopolymerisats, eines oder mehrerer Monomere aus der Gruppe a), durch radikalische Polymerisation in Masse, in Lösung, in Suspension oder in Emulsion, bei einer Temperatur von ≧ 80°C, gepfropft werden.

2. Verfahren nach Anspruch 1, dadurch gekennzeichnet, daß R¹ für (CH₂)ₙ mit n = 1 bis 4 und n = 8 steht, R² und R⁴ für eine Methylgruppe stehen und R³ für eine Methyl-, Ethyl-oder Phenylgruppe steht.

3. Verfahren nach Anspruch 1 oder 2, dadurch gekennzeichnet, daß die aufgepfropfte Polymerphase a) Styrol oder Methylmethacrylat enthält und die Copolymerphase b) 0 bis 50 Gew% Ethylen, mindestens 50 Gew% Vinylacetat und 0.01 bis 5 Gew% t-Butylperoxy-monovinyladipat enthält.

4. Verfahren nach Anspruch 1 bis 3, dadurch gekennzeichnet, daß die Pfropfung nach dem Emulsionspolymerisationsverfahren, unter Zusatz von 0.1 bis 5.0 Gew% Emulgator erfolgt.

5. Verfahren zur Herstellung von Peroxygruppenhaltigen Copolymerisaten enthaltend 0.01 bis 20 Gew% Peroxy-monovinylester der Formel I oder II 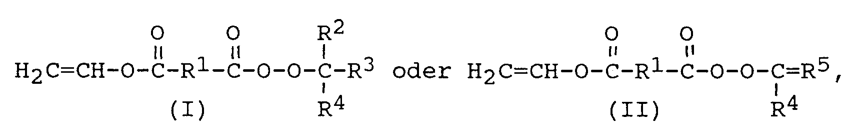 wobei R¹ für eine chemische Bindung oder für eine lineare oder verzweigte Alkylkette mit 1 bis 10 C-Atomen oder für eine Cycloalkylgruppe mit 3 bis 10 C-Atomen steht, R² und R³ eine Alkylgruppe mit 1 bis 4 C-Atomen bedeuten, R⁴ für eine Alkylgruppe oder eine alkylsubstituierte Phenylgruppe mit 1 bis 12 C-Atomen oder für eine Cycloalkylgruppe mit 3 bis 12 C-Atomen steht und R⁵ eine Cycloalkylgruppe mit 3 bis 12 C-Atomen bedeutet, und 80 bis 99.9 Gew% eines oder mehrerer Comonomere aus der Gruppe der (Meth)acrylsäureester von Alkoholen mit 1 bis 10 C-Atomen, Vinylester von gesättigten aliphatischen Carbonsäuren mit 2 bis 10 C-Atomen, Olefine, Vinylaromaten, Vinylhalogenide und/oder Vinylether, dadurch gekennzeichnet, daß die Herstellung durch radikalische Polymerisation in Masse, in Lösung, in Suspension oder in Emulsion bei einer Temperatur von 0 bis 80°C erfolgt.

6. Verfahren nach Anspruch 5, dadurch gekennzeichnet, daß die Copolymerisate 0.01 bis 20 Gew% Peroxy-monovinylester der Formel I oder II und 80 bis 99.9 Gew% eines oder mehrerer Comonomere aus der Gruppe Vinylacetat, Isopropenylacetat, Vinylpropionat, Vinyllaurat, Vinylchlorid und/oder Ethylen enthalten.

7. Verfahren nach Anspruch 5 oder 6, dadurch gekennzeichnet, daß die Copolymerisate zusammengesetzt sind aus 0 bis 50 Gew% Ethylen, mindestens 50 Gew% Vinylacetat und 0.01 bis 5 Gew% t-Butylperoxy-monovinyladipat.

8. Verfahren nach Anspruch 5 bis 7, dadurch gekennzeichnet, daß die Herstellung im Emulsionspolymerisationsverfahren durchgeführt wird.

9. Verfahren zur Herstellung von Peroxy-monovinylestern von aliphatischen Dicarbonsäuren mit der allgemeinen Formel I oder II 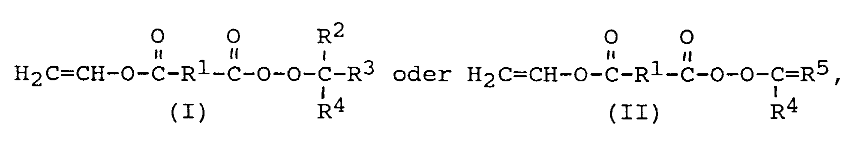 wobei R¹ für eine chemische Bindung oder für eine lineare oder verzweigte Alkylkette mit 1 bis 10 C-Atomen oder für eine Cycloalkylgruppe mit 3 bis 10 C-Atomen steht, R² und R³ eine Alkylgruppe mit 1 bis 4 C-Atomen bedeuten, R⁴ für eine Alkylgruppe oder eine alkylsubstituierte Phenylgruppe mit 1 bis 12 C-Atomen oder für eine Cycloalkylgruppe mit 3 bis 12 C-Atomen steht und R⁵ eine Cycloalkylgruppe mit 3 bis 12 C-Atomen bedeutet, dadurch gekennzeichnet, daß Dicarbonsäure-monovlnylester mit der allgemeinen Formel H₂C=CH-O-CO-R¹-COOH oder deren Säurechloride bzw. Säureanhydride mit Alkylhydroperoxid der allgemeinen Formel CR²R³R⁴-OOH oder R⁵=CR⁴-OOH verestert werden.

10. Verfahren nach Anspruch 9, dadurch gekennzeichnet, daß R¹ für (CH₂)ₙ mit n = 1 bis 4 und n = 8 steht, R² und R⁴ für eine Methylgruppe stehen und R³ für eine Methyl-, Ethyl- oder Phenylgruppe steht.

11. Verfahren nach Anspruch 9 oder 10, dadurch gekennzeichnet, daß R¹ (CH₂)ₙ mit n ist 2 bis 4 und n = 8 bedeutet und R², R³ und R⁴ eine Methylgruppe bedeuten.

12. Verfahren nach Anspruch 9 bis 11, dadurch gekennzeichnet, daß R¹ (CH₂)₄ bedeutet und R², R³ und R⁴ eine Methylgruppe bedeuten.

13. Verfahren nach Anspruch 9 bis 12, dadurch gekennzeichnet, daß die Veresterung in Gegenwart von Dicyclohexylcarbodiimid (DCCD) durchgeführt wird, wobei das Alkylhydroperoxid und DCCD jeweils in einem molaren Verhältnis von 1:1 bis 1:2, jeweils bezogen auf den Dicarbonsäuremonovinylester, eingesetzt werden und bei einer Temperatur von 0 bis 40°C, gegebenenfalls in Gegenwart eines inerten Lösungsmittels, miteinander umgesetzt werden.

## Claims (Claims for the following Contracting State(s): DE, FR, GB, IT, NL, SE)

1. Graft copolymers having improved phase binding between the graft base and the grafted-on polymer phase, prepared from
a) a grafted-on polymer phase containing one or more monomers from the group consisting of (meth)acrylates of alcohols having 1 to 10 carbon atoms, vinyl esters of saturated aliphatic carboxylic acids having 2 to 10 carbon atoms, olefins, vinyl halides, styrene and styrene derivatives, and
b) a peroxy group-containing copolymer phase containing from 0.01 to 20% by weight of an olefinically unsaturated peroxy compound of the general formula I or II 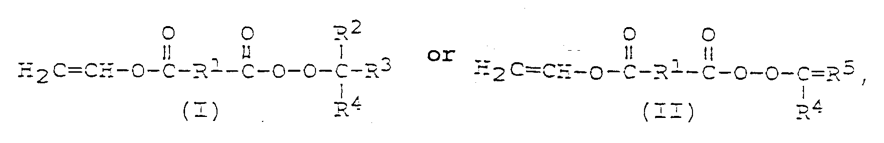 where R¹ is a chemical bond or a linear or branched alkyl chain having 1 to 10 carbon atoms or a cycloalkyl group having 3 to 10 carbon atoms, R² and R³ are an alkyl group having 1 to 4 carbon atoms, R⁴ is an alkyl group or an alkyl-substituted phenyl group having 1 to 12 carbon atoms or a cycloalkyl group having 3 to 12 carbon atoms, and R⁵ is a cycloalkyl group having 3 to 12 carbon atoms, and from 80 to 99.9% by weight of one or more comonomers from the group consisting of the (meth)acrylates of alcohols having 1 to 10 carbon atoms, vinyl esters of saturated aliphatic carboxylic acids having 2 to 10 carbon atoms, olefins, vinylaromatic compounds, vinyl halides and/or vinyl ethers.

2. Graft copolymers according to Claim 1, characterised in that R¹ is (CH₂)ₙ where n = 1 to 4 and n = 8, R² and R⁴ are a methyl group, and R³ is a methyl, ethyl or phenyl group.

3. Graft copolymers according to Claim 1 or 2, characterised in that the grafted-on polymer phase a) contains styrene or methyl methacrylate, and the copolymer phase b) contains from 0 to 50% by weight of ethylene, at least 50% by weight of vinyl acetate and from 0.01 to 5% by weight of t-butylperoxy monovinyl adipate.

4. Process for the preparation of the graft copolymers according to Claim 1, 2 or 3, characterised in that the peroxy group-containing copolymers b) are grafted with from 1 to 99% by weight, based on the total weight of the graft copolymer, of one or more monomers from group a), by free-radical polymerisation in bulk, in solution, in suspension or in emulsion, at a temperature ≧ 80°C.

5. Process according to Claim 4, characterised in that the grafting is carried out by the emulsion polymerisation process with addition of from 0.1 to 5.0% by weight of emulsifier.

6. Peroxy group-containing copolymers containing from 0.01 to 20% by weight of peroxy monovinyl esters of the formula as defined in Claim 1, 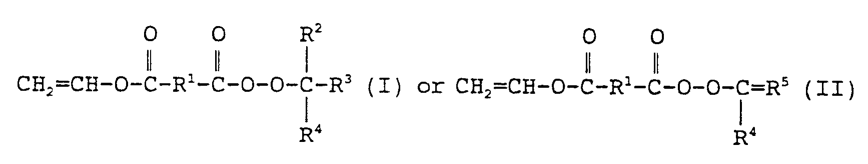 and from 80 to 99.9% by weight of one or more comonomers from the group consisting of the (meth)acrylates of alcohols having 1 to 10 carbon atoms, vinyl esters of saturated aliphatic carboxylic acids having 2 to 10 carbon atoms, olefins, vinylaromatic compounds, vinyl halides and/or vinyl ethers.

7. Peroxy group-containing copolymers according to Claim 6, characterised in that the copolymers contain from 0.01 to 20% by weight of peroxy monovinyl esters of the formula I or II and from 80 to 99.9% by weight of one or more comonomers from the group consisting of vinyl acetate, isopropenyl acetate, vinyl propionate, vinyl laurate, vinyl chloride and/or ethylene.

8. Peroxy group-containing copolymers according to Claim 6 or 7, characterised in that the copolymers are composed of from 0 to 50% by weight of ethylene, at least 50% by weight of vinyl acetate and from 0.01 to 5% by weight of t-butylperoxy monovinyl adipate.

9. Process for the preparation of the peroxy group-containing copolymers according to Claim 6, 7 or 8, by free-radical polymerisation in bulk, in solution, in suspension or in emulsion at a temperature of from 0 to 80°C.

10. Process according to Claim 9, characterised in that the preparation is carried out by the emulsion polymerisation process.

11. Peroxy monovinyl esters of aliphatic dicarboxylic acids of the general formula I or II 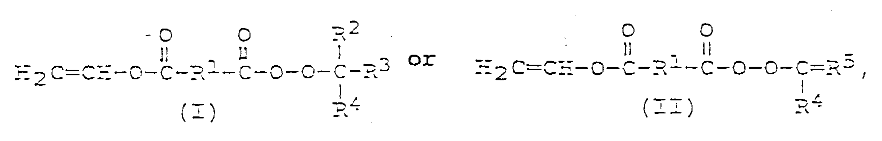 where R¹ is a chemical bond or a linear or branched alkyl chain having 1 to 10 carbon atoms or a cycloalkyl group having 3 to 10 carbon atoms, R² and R³ are an alkyl group having 1 to 4 carbon atoms, R⁴ is an alkyl group or an alkyl-substituted phenyl group having 1 to 12 carbon atoms or a cycloalkyl group having 3 to 12 carbon atoms, and R⁵ is a cycloalkyl group having 3 to 12 carbon atoms.

12. Peroxy monovinyl esters of the formula I according to Claim 11, characterised in that R¹ is (CH₂)ₙ where n = 1 to 4 and n = 8, R² and R⁴ are a methyl group, and R³ is a methyl, ethyl or phenyl group.

13. Peroxy monovinyl esters of the formula I according to Claim 11 or 12, characterised in that R¹ is (CH₂)ₙ where n is 2 to 4 and n = 8, and R², R³ and R⁴ are a methyl group.

14. Peroxy monovinyl esters of the formula I according to Claim 11, 12 or 13, characterised in that R¹ is (CH₂)₄, and R², R³ and R⁴ are a methyl group.

15. Process for the preparation of the peroxy monovinyl esters according to Claim 11 to 14, characterised in that the monovinyl dicarboxylates of the general formula H₂C=CH-O-CO-R¹-COOH or the acid chlorides or acid anhydrides thereof are esterified by means of an alkyl hydroperoxide of the general formula CR²R³R⁴-OOH or R⁵=CR⁴-OOH.

16. Process according to Claim 15, characterised in that the esterification is carried out in the presence of dicyclohexylcarbodiimide (DCCD), the alkyl hydroperoxide and DCCD each being employed in a molar ratio of from 1:1 to 1:2, in each case based on the monovinyl dicarboxylate, and being reacted with one another at a temperature of from 0 to 40°C, if desired in the presence of an inert solvent.

## Claims (Claims for the following Contracting State(s): ES)

1. Process for the preparation of graft copolymers having improved phase binding between the graft base and the grafted-on polymer phase, prepared from
a) a grafted-on polymer phase containing one or more monomers from the group consisting of (meth)acrylates of alcohols having 1 to 10 carbon atoms, vinyl esters of saturated aliphatic carboxylic acids having 2 to 10 carbon atoms, olefins, vinyl halides, styrene and styrene derivatives, and
b) a peroxy group-containing copolymer phase containing from 0.01 to 20% by weight of an olefinically unsaturated peroxy compound of the general formula I or II 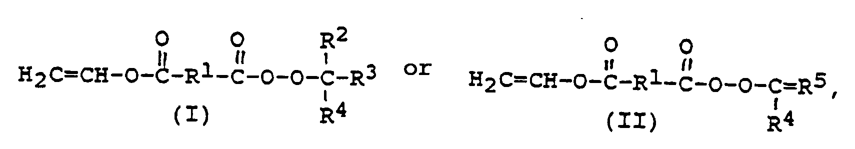 where R¹ is a chemical bond or a linear or branched alkyl chain having 1 to 10 carbon atoms or a cycloalkyl group having 3 to 10 carbon atoms, R² and R³ are an alkyl group having 1 to 4 carbon atoms, R⁴ is an alkyl group or an alkyl-substituted phenyl group having 1 to 12 carbon atoms or a cycloalkyl group having 3 to 12 carbon atoms, and R⁵ is a cycloalkyl group having 3 to 12 carbon atoms, and from 80 to 99.9% by weight of one or more comonomers from the group consisting of the (meth)acrylates of alcohols having 1 to 10 carbon atoms, vinyl esters of saturated aliphatic carboxylic acids having 2 to 10 carbon atoms, olefins, vinylaromatic compounds, vinyl halides and/or vinyl ethers, characterised in that the peroxy group-containing copolymers b) are grafted with from 1 to 99% by weight, based on the total weight of the graft copolymer, of one or more monomers from group a), by free-radical polymerisation in bulk, in solution, in suspension or in emulsion, at a temperature ≧ 80°C.

2. Process according to Claim 1, characterised in that R¹ is (CH₂)ₙ where n = 1 to 4 and n = 8, R² and R⁴ are a methyl group, and R³ is a methyl, ethyl or phenyl group.

3. Process according to Claim 1 or 2, characterised in that the grafted-on polymer phase a) contains styrene or methyl methacrylate, and the copolymer phase b) contains from 0 to 50% by weight of ethylene, at least 50% by weight of vinyl acetate and from 0.01 to 5% by weight of t-butylperoxy monovinyl adipate.

4. Process according to Claim 1 to 3, characterised in that the grafting is carried out by the emulsion polymerisation process with addition of from 0.1 to 5.0% by weight of emulsifier.

5. Process for the preparation of peroxy group-containing copolymers containing from 0.01 to 20% by weight of peroxy monovinyl esters of the formula I or II, 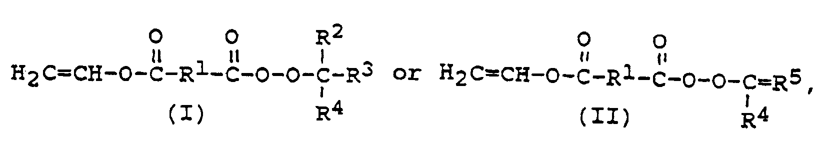 where R¹ is a chemical bond or a linear or branched alkyl chain having 1 to 10 carbon atoms or a cycloalkyl group having 3 to 10 carbon atoms, R² and R³ are an alkyl group having 1 to 4 carbon atoms, R⁴ is an alkyl group or an alkyl-substituted phenyl group having 1 to 12 carbon atoms or a cycloalkyl group having 3 to 12 carbon atoms, and R⁵ is a cycloalkyl group having 3 to 12 carbon atoms, and from 80 to 99.9% by weight of one or more comonomers from the group consisting of the (meth)acrylates of alcohols having 1 to 10 carbon atoms, vinyl esters of saturated aliphatic carboxylic acids having 2 to 10 carbon atoms, olefins, vinylaromatic compounds, vinyl halides and/or vinyl ethers, characterised in that the preparation takes place by free-radical polymerisation in bulk, in solution, in suspension or in emulsion at a temperature of from 0 to 80°C.

6. Process according to Claim 5, characterised in that the copolymers contain from 0.01 to 20% by weight of peroxy monovinyl esters of the formula I or II and from 80 to 99.9% by weight of one or more comonomers from the group consisting of vinyl acetate, isopropenyl acetate, vinyl propionate, vinyl laurate, vinyl chloride and/or ethylene.

7. Process according to Claim 5 or 6, characterised in that the copolymers are composed of from 0 to 50% by weight of ethylene, at least 50% by weight of vinyl acetate and from 0.01 to 5% by weight of t-butylperoxy monovinyl adipate.

8. Process according to Claim 5 to 7, characterised in that the preparation is carried out by the emulsion polymerisation process.

9. Process for the preparation of peroxy monovinyl esters of aliphatic dicarboxylic acids of the general formula I or II 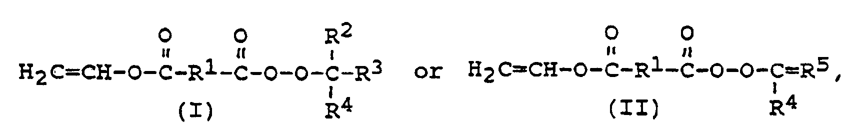 where R¹ is a chemical bond or a linear or branched alkyl chain having 1 to 10 carbon atoms or a cycloalkyl group having 3 to 10 carbon atoms, R² and R³ are an alkyl group having 1 to 4 carbon atoms, R⁴ is an alkyl group or an alkyl-substituted phenyl group having 1 to 12 carbon atoms or a cycloalkyl group having 3 to 12 carbon atoms, and R⁵ is a cycloalkyl group having 3 to 12 carbon atoms, characterised in that the monovinyl dicarboxylates of the general formula H₂C=CH-O-CO-R¹-COOH or the acid chlorides or acid anhydrides thereof are esterified by means of an alkyl hydroperoxide of the general formula CR²R³R⁴-OOH or R⁵=CR⁴-OOH.

10. Process according to Claim 9, characterised in that R¹ is (CH₂)ₙ where n = 1 to 4 and n = 8, R² and R⁴ are a methyl group, and R³ is a methyl, ethyl or phenyl group.

11. Process according to Claim 9 or 10, characterised in that R¹ is (CH₂)ₙ where n is 2 to 4 and n = 8, and R², R³ and R⁴ are a methyl group.

12. Process according to Claim 9 to 11, characterised in that R¹ is (CH₂)₄, and R², R³ and R⁴ are a methyl group.

13. Process according to Claim 9 to 12, characterised in that the esterification is carried out in the presence of dicyclohexylcarbodiimide (DCCD), the alkyl hydroperoxide and DCCD each being employed in a molar ratio of from 1:1 to 1:2, in each case based on the monovinyl dicarboxylate, and being reacted with one another at a temperature of from 0 to 40°C, if desired in the presence of an inert solvent.

## Revendications (Revendications pour l'(les) Etat(s) contractant(s) suivant(s): DE, FR, GB, IT, NL, SE)

1. Copolymères greffés ayant une liaison de phase améliorée entre la base de greffage et la phase polymère greffée, préparé à partir :
a) d'une phase polymère greffée, contenant un ou plusieurs monomères appartenant au groupe des esters de l'acide (méth)acrylique et des alcools avec 1 à 10 atomes de carbone, des esters vinyliques des acides carboxyliques aliphatiques saturés avec 2 à 10 atomes de carbone, des oléfines, des halogénures de vinyle et du styrène ainsi que des dérivés du styrène, et
b) d'une phase copolymère contenant des groupes peroxy, contenant
de 0,01 à 20 % en poids d'un composé peroxy à insaturation oléfinique de formule générale I ou II 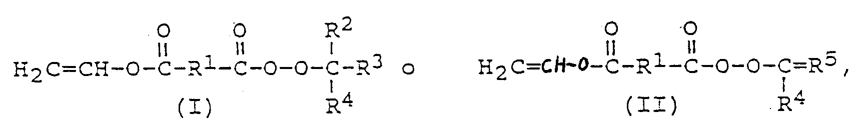 R¹ représentant une liaison directe ou une chaîne alkyle linéaire ou ramifiée avec 1 à 10 atomes de carbone ou un groupe cycloalkyle avec 3 à 10 atomes de carbone, R² et R³ représentant un groupe alkyle avec 1 à 4 atomes de carbone, R⁴ représentant un groupe alkyle ou un groupe phényl alkyle-substitué avec 1 à 12 atomes de carbone ou un groupe cycloalkyle avec 3 à 12 atomes de carbone et R⁵ représentant un groupe cycloalkyle avec 3 à 12 atomes de carbone et de 80 à 99,9 % en poids d'un ou de plusieurs comonomères pris dans le groupe des esters de l'acide (méth)acrylique et des alcools avec 1 à 10 atomes de carbone, des esters vinyliques d'acides carboxyliques aliphatiques saturés avec 2 à 10 atomes de carbone, des oléfines, des composés aromatiques de vinyle, des halogénures de vinyle et/ou des éthers vinyliques.

2. Copolymère greffé selon la revendication 1, caractérisé en ce que R¹ représente (CH₂)ₙ avec n = 1 à 4 et n = 8, R² et R⁴ représentent un groupe méthyle et R³ représente un groupe méthyle, éthyle ou phényle.

3. Copolymère greffé selon la revendication 1 ou 2, caractérisé en ce que la phase polymère greffée a) contient du styrène ou du méthacrylate de méthyle et la phase copolymère b) contient de 0 à 50 % en poids d'éthylène, [au moins 50 % en poids] d'acétate de vinyle et de 0,01 à 5 % en poids d'adipate peroxy-monovinylique de t-butyle.

4. Procédé pour la préparation des copolymères greffés selon la revendication 1, 2 ou 3, caractérisé en ce que les copolymères b) contenant des groupes peroxy avec une teneur de 1 à 99 % en poids par rapport au poids total du copolymère greffé d'un ou de plusieurs monomères pris dans le groupe a), sont greffés par polymérisation radicalaire en masse, en solution, en suspension ou en émulsion à une température ≧80°C.

5. Procédé selon la revendication 4, caractérisé en ce que le greffage est effectué selon le procédé de polymérisation en émulsion en ajoutant de 0,1 à 5,0 % en poids en émulsifiant.

6. Copolymères contenant des groupes peroxy ayant une teneur de 0,01 à 20 % en poids en ester monovinylique et peroxy-monovinylique de formule 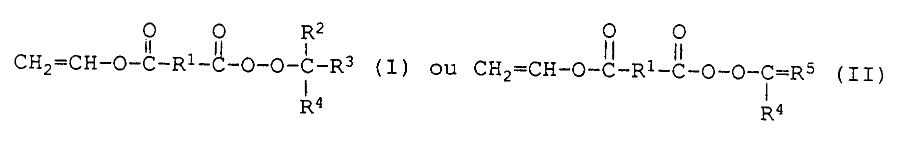 comme défini dans la revendication 1, et de 80 à 99,9 % en poids d'un ou de plusieurs comonomères pris dans le groupe comprenant les esters de l'acide (méth)acrylique et des alcools avec 1 à 10 atomes de carbone, les esters vinyliques des acides carboxyliques aliphatiques saturés avec 2 à 10 atomes de carbone, les oléfines, les composés aromatiques de vinyle, les halogénures de vinyle et/ou les éthers vinyliques.

7. Copolymères contenant des groupes peroxy selon la revendication 6, caractérisés en ce que les copolymères contiennent de 0,01 à 20 % en poids d'esters peroxy-monovinyliques de formule I ou II et de 80 à 99,9 % en poids d'un ou de plusieurs comonomères pris dans le groupe des acétate de vinyle, acétate d'isopropényle, propionate de vinyle, laurate de vinyle, chlorure de vinyle et/ou éthylène.

8. Copolymères contenant des groupes peroxy selon la revendication 6 ou 7, caractérisés en ce que les copolymères se composent de 0 à 50 % en poids d'éthylène, [d'au moins 50 % en poids] d'acétate de vinyle et de 0,01 à 5 % en poids d'adipate peroxy-monovinylique de t-butyle.

9. Procédé pour la préparation des copolymères contenant des groupes peroxy selon les revendications 6, 7 ou 8 par polymérisation radicalaire en masse, en solution, en suspension ou en émulsion à une température de 0 à 80°C.

10. Procédé selon la revendication 9, caractérisé en ce qu'on réalise la préparation selon le procédé de polymérisation en émulsion.

11. Esters peroxy-monovinyliques des acides dicarboxyliques aliphatiques de formule générale I ou II 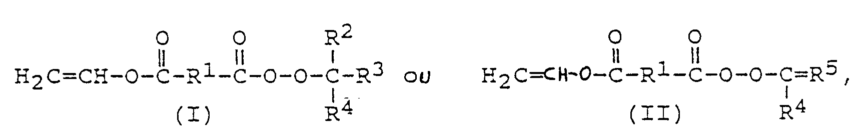 où R¹ représente une liaison chimique ou une chaîne alkyle linaire ou ramifiée avec 1 à 10 atomes de carbone ou un groupe cycloalkyle avec 3 à 10 atomes de carbone, R² et R³ représentent un groupe alkyle avec 1 à 4 atomes de carbone, R⁴ représente un groupe alkyle ou un groupe phényle alkyl-substitué avec 1 à 12 atomes de carbone ou un groupe cycloalkyle avec 3 à 12 atomes de carbone et R⁵ représente un groupe cycloalkyle avec 3 à 12 atomes de carbone.

12. Esters peroxy-monovinyliques de formule I selon la revendication 11, caractérisés en ce que R¹ représente (CH₂)ₙ avec n = 1 à 4 et n = 8, R² et R⁴ représentent un groupe méthyle et R³ représente un groupe méthyle, éthyle ou phényle.

13. Esters peroxy-monovinyliques de formule I selon la revendication 11 ou 12, caractérisés en ce que R¹ représente (CH₂)₄ avec n allant de 2 à 4 et n = 8, et R², R³ et R⁴ représentent un groupe méthyle.

14. Esters peroxy-monovinyliques de formule I selon les revendications 11, 12 ou 13, caractérisés en ce que R¹ représente (CH₂)ₙ et R², R³ et R⁴ représentent un groupe méthyle.

15. Procédé pour la préparation des esters peroxy-monovinyliques selon les revendications 11 à 14, caractérisé en ce que les esters monovinyliques de l'acide dicarboxylique ayant la formule générale H₂C=CH-O-CO-R¹-COOH ou leurs chlorures d'acide, respectivement anhydrides d'acide, sont estérifiés avec l'hydroperoxyde d'alkyle de formule générale CR²R³R⁴-OOH ou R⁵=CR⁴-OOH.

16. Procédé selon la revendication 15, caractérisé en ce qu'on effectue l'estérification en présence du dicyclohexylcarbodiimide (DCCD), en utilisant l'hydroperoxyde d'alkyle et le DCCD chaque fois dans un rapport molaire de 1:1 à 1:2, chaque fois par rapport à l'ester monovinylique d'acide dicarboxylique, et en faisant réagir 'netre eux, à une température de 0 à 40°C, éventuellement en présence d'un solvant inerte.

## Revendications (Revendications pour l'(les) Etat(s) contractant(s) suivant(s): ES)

1. Procédé pour la préparation de copolymères greffés ayant une liaison de phase améliorée entre la base de greffage et la phase polymère greffée, préparés à partir :
a) d'une phase polymère greffée, contenant un ou plusieurs monomères appartenant au groupe des esters de l'acide (méth)acrylique et des alcools avec 1 à 10 atomes de carbone, des esters vinyliques des acides carboxyliques aliphatiques saturés avec 2 à 10 atomes de carbone, des oléfines, des halogénures de vinyle et du styrène ainsi que des dérivés du styrène, et
b) d'une phase copolymère contenant des groupes peroxy, contenant
de 0,01 à 20 % en poids d'un composé peroxy à insaturation oléfinique de formule générale I ou II 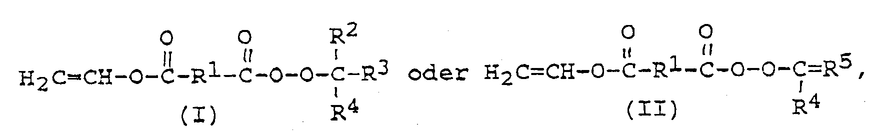 R¹ représentant une liaison directe ou une chaîne alkyle linéaire ou ramifiée avec 1 à 10 atomes de carbone ou un groupe cycloalkyle avec 3 à 10 atomes de carbone, R² et R³ représentant un groupe alkyle avec 1 à 4 atomes de carbone, R⁴ représentant un groupe alkyle ou un groupe phényle alkyl-substitué avec 1 à 12 atomes de carbone ou un groupe cycloalkyle avec 3 à 12 atomes de carbone et R⁵ représentant un groupe cycloalkyle avec 3 à 12 atomes de carbone et de 80 à 99,9 % en poids d'un ou de plusieurs comonomères pris dans le groupe des esters de l'acide (méth)acrylique et des alcools avec 1 à 10 atomes de carbone, des esters vinyliques d'acides carboxyliques aliphatiques saturés avec 2 à 10 atomes de carbone, des oléfines, des composés aromatiques de vinyle, des halogénures de vinyle et/ou des éthers vinyliques, caractérisé en ce qu'on greffe les copolymères b) contenant des groupes peroxy avec, 1 à 99% en poids par rapport au poids total du copolymère greffé, d'un ou de plusieurs monomères pris dans le groupe a), par polymérisation radicalaire en masse, en solution, en suspension ou en émulsion, à une température de ≧80°C.

2. Procédé selon la revendication 1, caractérisé en ce que R¹ représente (CH₂)ₙ avec n = 1 à 4 et n = 8, R² et R⁴ représentent un groupe méthyle et R³ représente un groupe méthyle, éthyle ou phényle.

3. Procédé selon la revendication 1 ou 2, caractérisé en ce que la phase polymère greffée a) contient du styrène ou du méthacrylate de méthyle et la phase copolymère b) contient de 0 à 50 % en poids d'éthylène, au moins 50 % en poids d'acétate de vinyle et de 0,01 à 5 % en poids d'adipate peroxy-monovinylique de t-butyle.

4. Procédé selon la revendication 1 à 3, caractérisé en ce qu'on effectue le greffage selon le procédé de polymérisation en émulsion en ajoutant de 0,1 à 5,0% en poids d'émulsifiant.

5. Procédé pour la préparation de copolymères contenant des groupes peroxy ayant une teneur de 0,01 à 20 % en poids en ester monovinylique et peroxy-monovinylique de formule I ou II 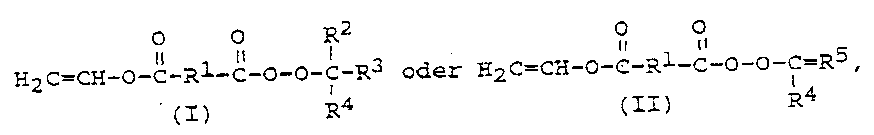 R¹ représentant une liaison chimique ou une chaîne alkyle linéaire ou ramifiée avec 1 à 10 atomes de C ou un groupe cycloalkyle avec 3 à 10 atomes de C, R² et R³ représentent un groupe alkyle avec 1 à 4 atomes de C, R⁴ représentant un groupe alkyle ou un groupe phényle alkyl-substitué avec 1 à 12 atomes de C ou un groupe cycloalkyle avec 3 à 12 atomes de C et R⁵ représentant un groupe cycloalkyle avec 3 à 12 atomes de C et de 80 à 99,9 % en poids d'un ou de plusieurs comonomères pris dans le groupe comprenant les esters de l'acide (méth)acrylique et des alcools avec 1 à 10 atomes de carbone, les esters vinyliques des acides carboxyliques aliphatiques saturés avec 2 à 10 atomes de carbone, les oléfines, les composés aromatiques de vinyle, les halogénures de vinyle et/ou les éthers vinyliques, caractérisé en ce qu'on effectue la préparation par polymérisation radicalaire en masse, en solution, en suspension ou en émulsion à une température de 0 à 80°C.

6. Procédé selon la revendication 5, caractérisé en ce que les copolymères contiennent de 0,01 à 20 % en poids d'esters peroxy-monovinyliques de formule I ou II et de 80 à 99,9 % en poids d'un ou de plusieurs comonomères pris dans le groupe des acétate de vinyle, acétate d'isopropényle, propionate de vinyle, laurate de vinyle, chlorure de vinyle et/ou éthylène.

7. Procédé selon la revendication 5 ou 6, caractérisé en ce que les copolymères se composent de 0 à 50 % en poids d'éthylène, d'au moins 50 % en poids d'acétate de vinyle et de 0,01 à 5 % en poids d'adipate peroxy-monovinylique de t-butyle.

8. Procédé selon les revendications 5 à 7, caractérisé en ce que la préparation est effectuée selon le procédé de polymérisation en émulsion.

9. Procédé pour la préparation d'esters peroxy-monovinyliques des acides dicarboxyliques aliphatiques de formule générale I ou II 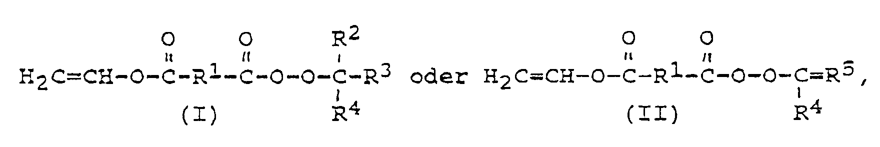 R¹ représentant une liaison chimique ou une chaîne alkyle linéaire ou ramifiée avec 1 à 10 atomes de C ou un groupe cycloalkyle avec 3 à 10 atomes de C, R² et R³ représentant un groupe alkyle avec 1 à 4 atomes de C, R⁴ représentant un groupe alkyle ou un groupe phényle alkyl-substitué avec 1 à 12 atomes de C ou un groupe cycloalkyle avec 3 à 12 atomes de C et R⁵ représentant un groupe cycloalkyle avec 3 à 12 atomes de C, caractérisé en ce que les esters monovinyliques d'acide dicarboxylique ayant la formule générale H₂C=CH-O-CO-R¹-COOH ou leurs chlorures d'acide, respectivement anhydrides d'acide, sont estérifiés avec l'hydroperoxyde d'alkyle de formule générale CR²R³R⁴-OOH ou R⁵=CR⁴-OOH.

10. Procédé selon la revendication 9, caractérisé en ce que R¹ représente (CH₂)ₙ avec n = 1 à 4 et n = 8, R² et R⁴ représentent un groupe méthyle et R³ représente un groupe méthyle, éthyle ou phényle.

11. Procédé selon la revendication 9 ou 10, caractérisé en ce que R¹ représente (CH₂)ₙ avec n allant de 2 à 4 et n = 8, et R², R³ et R⁴ représentent un groupe méthyle.

12. Procédé selon les revendications 9 à 12, caractérisé en ce que R¹ représente (CH₂)₄ et R², R³ et R⁴ représentent un groupe méthyle.

13. Procédé selon les revendications 9 à 12, caractérisé en ce qu'on effectue l'estérification en présence du dicyclohexylcarbodiimide (DCCD) en utilisant l'hydroperoxyde d'alkyle et le DCCD chaque fois dans un rapport molaire de 1:1 à 1:2, chaque fois par rapport à l'ester monovinylique d'acide dicarboxylique, et en les faisant réagir entre eux, à une température de 0 à 40°C, éventuellement en présence d'un solvant inerte.
